(19) Europäisches Patentamt
European Patent Office
Office européen des brevets

(11) Veröffentlichungsnummer: **0 333 135 B1**

(12) # EUROPÄISCHE PATENTSCHRIFT

(45) Veröffentlichungstag der Patentschrift: **21.12.94**

(51) Int. Cl.$^5$: **C08G 65/32**, C08G 65/28, C10G 33/04, C08G 63/66, C08G 63/68

(21) Anmeldenummer: **89104518.9**

(22) Anmeldetag: **14.03.89**

Die Akte enthält technische Angaben, die nach dem Eingang der Anmeldung eingereicht wurden und die nicht in dieser Patentschrift enthalten sind.

(54) **Veresterte Glycidylether-Additionsprodukte und deren Verwendung.**

(30) Priorität: **18.03.88 DE 3809065**

(43) Veröffentlichungstag der Anmeldung:
**20.09.89 Patentblatt 89/38**

(45) Bekanntmachung des Hinweises auf die Patenterteilung:
**21.12.94 Patentblatt 94/51**

(84) Benannte Vertragsstaaten:
**DE FR GB IT NL**

(56) Entgegenhaltungen:
**EP-A- 0 055 433**
**EP-A- 0 055 434**
**EP-A- 0 209 850**
**EP-A- 0 212 265**
**US-A- 4 026 941**

(73) Patentinhaber: **HOECHST AKTIENGESELLSCHAFT**

**D-65926 Frankfurt (DE)**

(72) Erfinder: **Kupfer, Rainer, Dr.**
**Römerstrasse 2**
**D-8261 Kastl (DE)**
Erfinder: **Böse, Willibald, Dr.**
**Rossfeldstrasse 7**
**D-8269 Burgkirchen (DE)**
Erfinder: **Hille, Martin, Dr.**
**In den Eichen 46**
**D-6237 Liederbach (DE)**
Erfinder: **Böhm, Roland**
**Fischbacher Strasse 29**
**D-6233 Kelkheim (Taunus) (DE)**
Erfinder: **Staiss, Friedrich**
**Odenwaldstrasse 21**
**D-6200 Wiesbaden (DE)**

**EP 0 333 135 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft veresterte Glycidylether-Additionsprodukte und die Verwendung dieser Produkte.

Bei der Förderung von Erdöl tritt eine zunehmende Verwässerung des Öls ein. Das mitgeförderte Wasser bildet mit dem Öl eine Wasser-in-Öl-Emulsion. In dem emulgierten Wasser können Salze wie Natriumchlorid, Calciumchlorid und Magnesiumchlorid gelöst sein. Dieses Emulsionswasser muß vor dem Transport abgetrennt werden. In den Raffinerien wird vor der Destillation der Salzgehalt durch eine erneute Emulsionsbildung mit Süßwasser und Demulgierung weiter abgesenkt. Ein zu hoher Salzgehalt im Rohöl kann zu Störungen und Korrosion in den Raffinerien führen.

Ein Erdölspalter, auch Demulgator oder Emulsionsspalter genannt, hat die Aufgabe, bei möglichst geringer Anwendungskonzentration die Emulsion zu brechen und bei diesem Separationsprozeß möglichst ohne oder mit minimaler zusätzlicher Aufwendung von Wärme eine vollständige Wasserabscheidung zu bewirken und den Salzgehalt auf ein Minimum zu reduzieren. Die Qualitätskriterien für geliefertes Rohöl sind das Restsalz und der Wassergehalt.

Die Rohöle sind je nach ihrer Provenienz unterschiedlich zusammengesetzt. Die natürlichen Emulsionsstabilisatoren besitzen einen komplizierten, differenzierten chemischen Aufbau. Zur Überwindung ihrer Wirkung müssen selektiv Spalter entwickelt werden. Durch verschiedene Förder- und Aufbereitungsbedingungen werden die Anforderungen, die an einen Erdölspalter gestellt werden, noch vielfältiger. Durch das ständige Erschließen neuer Erdölfelder und die Änderung der Förderbedingungen älterer Erdölfelder bleibt die Entwicklung optimaler Demulgatoren ein akutes Problem, und es werden eine große Anzahl verschiedenartig aufgebauter Demulgatoren oder Demulgatormischungen benötigt.

Aus der CA--A-1 153 356 sind Glycidylether-Additionsprodukte als Verdickungsmittel für Hydraulikflüssigkeiten auf Glykol-Wasser-Basis bekannt. Im einzelnen handelt es sich unter anderem um Additionsprodukte aus Ethylenoxid/Propylenoxid-Blockpolymeren und Diglycidylethern von Bisphenolen oder Polyglycidylethern von Phenol/Formaldehyd-Kondensationsprodukten (Novolak-Harzen). In den beiden US--A-4 419 265 ( = EP-A-55434) und 4 420 413 ( = EP-A-55433) sind Additionsprodukte aus Ethylenoxid/Propylenoxid-Blockpolymeren und Glycidylethern als Erdölspalter beschrieben. Die Erdölspalter der US-A-4 419 265 werden dadurch erhalten, daß ein Ethylenoxid/Propylenoxid-Blockpolymeres an einem Diglycidylether von Bisphenolen angelagert wird und jene der US-A-4 420 413 dadurch, daß an dem genannten Anlagerungsschritt noch eine Oxalkylierung mit Ethylenoxid, Propylenoxid und/oder Butylenoxid angeschlossen wird.

In der EP-A-209 850 sind Veresterungsprodukte aus oxalkylierten primären Fettaminen, Ethylenoxid/Propylenoxid-Blockpolymeren und Dicarbonsäuren als Erdölspalter beschrieben, und gemäß EP-A-212 265 erhält man weitere Erdölspalter durch Quaternisierung der genannten Veresterungsprodukte. Alle diese bekannten Erdölspalter lassen noch zu wünschen übrig.

Mit der vorliegenden Erfindung werden neue Erdölspalter zur Verfügung gestellt, die Veresterungsprodukte aus oxalkylierten primären Fettaminen (1), Additionsverbindungen aus Ethylenoxid/Propylenoxid-Blockpolymeren und Glycidylethern (2) und Dicarbonsäuren (3) darstellen. Die erfindungsgemäßen veresterten Glycidylether-Additionsprodukte unterscheiden sich also von den Veresterungsprodukten gemäß EP-A-209 850 dadurch, daß die Komponente (2) nicht ein Ethylenoxid/Propylenoxid-Blockpolymeres als solches, sondern eine Additionsverbindung aus derartigen Blockpolymeren und Glycidylethern gemäß US-A-4 419 265 und 4 420 413 ist. Es ist überraschend, daß durch diesen Austausch Erdölspalter mit einer noch weiter gesteigerten Wirksamkeit erhalten werden. Diese hohe Wirksamkeit dürfte ihren Grund in der speziellen Struktur der Reaktionsprodukte haben, die aus der erfindungsgemäßen Kombination der genannten Komponenten (1) und (3) mit der speziellen Adduktverbindung (2) resultieren.

Die erfindungsgemäßen Additionsprodukte sind demnach dadurch gekennzeichnet, daß sie erhalten werden durch Veresterung von (1) einem oxalkylierten primären Fettamin der nachstehenden Formel I

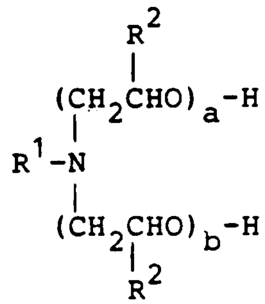

worin $R^1$ ein Alkylrest oder Alkenylrest mit 6 bis 23 C-Atomen ist, $R^2$ H oder $CH_3$ ist und innerhalb der Kette des Polyoxalkylenrestes, in Blöcken angeordnet, auch beide Bedeutungen annehmen kann, und a und b Zahlen von insgesamt 2 bis 30 sind, mit der Maßgabe, daß weder a noch b Null ist,
und (2) einem Additionsprodukt aus 1 mol OH-Funktion eines Polyether-Blockpolymeren der nachstehenden Formel II

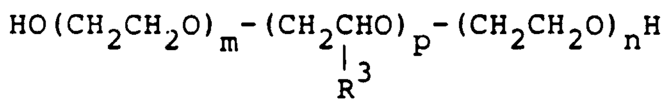

worin $R^3$ Methyl oder Ethyl bedeutet, n und m Zahlen sind, die so gewählt sind, daß der Polyethylenoxidanteil 10 bis 80 % des Molekulargewichts des Gesamtmoleküls beträgt, und p eine Zahl von 10 bis 100 ist,
und 0,3 bis 1 mol Epoxid-Funktion eines Glycidylethers der nachstehenden Formel III

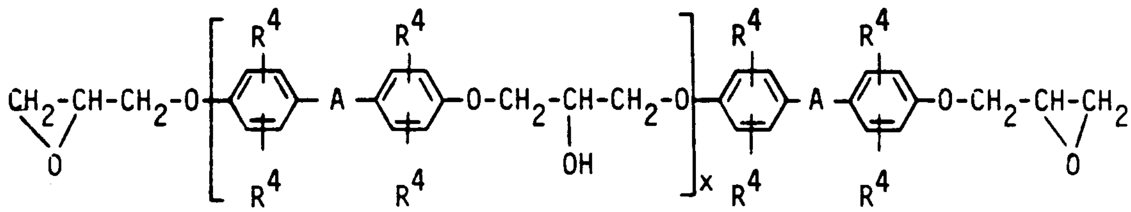

worin $R^4$ gleich oder verschieden sein kann und Wasserstoff, $C_1$-$C_4$-Alkyl oder Halogen, A eine direkte Bindung, eine Sulfonyl- oder Cyclohexylgruppe oder eine Gruppe der Formel

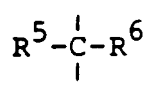

worin $R^5$ und $R^6$ Wasserstoff, Methyl oder Phenyl bedeuten, und x eine Zahl von 0 bis 10 bedeutet,
oder 0,1 bis 1,5 mol Epoxid-Funktion eines Glycidylethers der nachstehenden Formel IV

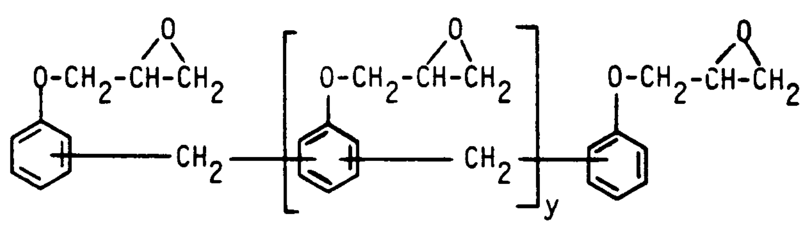

worin y eine Zahl von 1 bis 10 ist,
mit (3) einer Dicarbonsäure, wobei die Reaktionskomponenten (1), (2) und (3) im Äquivalentverhältnis von 1 : (0,1 bis 1,5) : (0,5 bis 2) eingesetzt werden.

Bevorzugte oxalkylierte primäre Fettamine der Formel I sind solche, wenn $R^1$ ein Alkylrest mit 8 bis 18 C-Atomen ist, $R^2$ H ist und a und b (gleich oder verschieden, ganze oder gebrochene) Zahlen von insgesamt 2 bis 15 sind, unter Berücksichtigung der oben angegebenen Maßgabe.
Die Oxalkylierung von primären Fettaminen ist wohlbekannt und kann nach einer der Methoden zur Oxalkylierung von acide (aktive) H-Atome tragenden Verbindungen durchgeführt werden. Die oxalkylierten Fettamine können gemäß den Bedeutungen von $R^2$ Einheiten des Ethylenoxids oder Propylenoxids oder blockweise angeordnete Einheiten des Ethylenoxids und Propylenoxids tragen, wobei die ethoxylierten, das heißt nur Ethylenoxid-Einheiten tragenden primären Fettamine bevorzugt sind. Bei den zur Oxalkylierung eingesetzten Fettaminen kann es sich gemäß den Bedeutungen von $R^1$ um einzelne primäre Fettamine

oder um Gemische davon handeln. Es kann sich auch um solche Fettamine handeln, deren Kohlenwasserstoffkette eine oder mehrere Doppelbindungen enthält, wie die Reste der Öl-, Linol- oder Linolensäure. Die bevorzugten primären Fettamine sind die technisch verfügbaren Produkte, wie Stearylamin, Cocosfettamin oder Talgfettamin (in diesen technischen Produkten liegen Alkylreste mit im wesentlichen 8 bis 18 C-Atomen vor).

Bevorzugte Polyether-Blockpolymerisate der Formel II sind solche, wenn $R^3$ $CH_3$ ist, n und m Zahlen sind, die so gewählt sind, daß der Polyethylenoxidanteil 15 bis 70 % des Molekulargewichtes des Gesamtmoleküls beträgt, und p eine Zahl von 20 bis 70 ist.

Bevorzugte Glycidylether der Formel III, das sind Diglycidylether von Bisphenolen, sind solche, wenn $R^4$ jeweils gleich ist und Wasserstoff bedeutet, A eine Gruppe der Formel

$$R^5-\overset{|}{\underset{|}{C}}-R^6$$

ist, worin $R^5$ und $R^6$ gleich sind und H oder $CH_3$ bedeuten, und x eine Zahl von 0 bis 5 ist.

Bevorzugte Glycidylether der Formel IV, das sind Polyglycidylether von Phenol/Formaldehyd-Kondensations-Produkten, sind solche, wenn y eine Zahl von 2 bis 5 ist (die -$CH_2$-Brücken in der Formel IV stehen bekanntlich im wesentlichen in ortho- und para-Position am Phenylkern).

Die Bereitung der Reaktionskomponente (2) erfolgt durch Addition eines Polyether-Blockpolymeren der Formel II an einem Glycidylether der Formel III im Äquivalentverhältnis von 1 : 0,3 bis 1, vorzugsweise 1 : 0,5 bis 0,9, oder an einem Glycidylether der Formel IV im Äquivalentverhältnis von 1 : 0,1 bis 1,5, vorzugsweise 1 : 0,3 bis 1.

Es hat sich herausgestellt, daß Erdölspalter mit besonders guter Wirkung dann erhalten werden, wenn die Reaktionskomponente (2) propoxiliert ist, wenn also das genannte Additionsprodukt aus einem Polyether-Blockpolymeren der Formel II und einem Glycidylether der Formel III oder der Formel IV mit 5 bis 700 g Propylenoxid, vorzugsweise 30 bis 300 g Propylenoxid, pro 100 g Additionsprodukt, propoxiliert worden ist.

Die Polyether-Blockpolymeren der Formel II und der Glycidylether der Formeln III und IV sowie die Umsetzungen dieser Komponenten zu den in Rede stehenden Additionsprodukten, welche die Reaktionskomponente (2) der vorliegenden Erfindung darstellen, sind in den eingangs genannten Druckschriften derart ausführlich beschrieben, daß es sich erübrigt, hier darauf noch näher einzugehen. Sie sind außerdem im Handel erhältlich.

Die einzusetzende Dicarbonsäure, das ist die Reaktionskomponente (3), kann aromatischer oder aliphatischer Art sein. Die aromatische Dicarbonsäure ist vorzugsweise die Phthalsäure. Die aliphatischen Dicarbonsäuren können gesättigt oder ungesättigt sein, wie die Fumarsäure und die Maleinsäure. In Betracht kommen sowohl die üblichen Dicarbonsäuren der Formel $HOOC-(CH_2)_z-COOH$, worin z eine Zahl von vorzugsweise 1 bis 8 ist und wobei eine oder mehrere $CH_2$-Gruppen mit OH-, $C_1$ bis $C_{18}$-Alkyl oder mit $C_3$ bis $C_{18}$-Alkenyl substituiert sein können, als auch jene in Form der dimerisierten Fettsäuren entsprechend der Formel HOOC-R-COOH, worin R das Alkylgerüst einer dimerisierten Fettsäure mit vorzugsweise 22 bis 42 C-Atomen, insbesondere 34 C-Atomen, ist. Bevorzugte dimerisierte Fettsäuren sind jene, die unter der Bezeichnung Pripol im Handel erhältlich sind. Diese dimerisierten Fettsäuren enthalten bekanntlich im wesentlichen lineare und cyclische Verbindungen sowie Anteile von trimeren und höher kondensierten Fettsäuren. Vertreter der genannten üblichen Dicarbonsäuren sind Bernstein-, Adipin-, Pimelin- und Sebacinsäure sowie Dodecyl- oder Dodecenylbernsteinsäure, Äpfelsäure und Weinsäure. Die als Reaktionskomponente (3) bevorzugten Dicarbonsäuren sind demnach a) jene der Formel $HOOC-(CH_2)_z-COOH$, worin z eine Zahl von 1 bis 8 ist, b) die $C_1$ bis $C_{18}$-Alkyl- oder $C_3$ bis $C_{18}$-Alkenyl-substituierten Dicarbonsäuren der genannten Formel, wie die Dodecyl- oder Dodecenylbernsteinsäure, c) die dimerisierten Fettsäuren der Formel HOOC-R-COOH, worin R das Alkylgerüst einer dimerisierten Fettsäure mit 22 bis 42 C-Atomen ist, insbesondere mit 34 C-Atomen, d) die Fumar- und Maleinsäure und e) die Phthalsäure. Es versteht sich von selbst, daß anstelle einer Dicarbonsäure auch Dicarbonsäureanhydride, Dicarbonsäurehalogenide oder Dicarbonsäureester eingesetzt werden können, da auch mit diesen Dicarbonsäurederivaten die erfindungsgemäße Veresterungsreaktion abläuft.

Das charakteristische Merkmal der Veresterung der beschriebenen Reaktionskomponenten (1), (2) und (3) zur Herstellung der erfindungsgemäßen Erdölspalter ist das Äquivalentverhältnis, in dem die drei Komponenten eingesetzt werden; es beträgt 1 : (0,1 bis 1,5) : (0,5 bis 2), vorzugsweise 1 : (0,3 bis 1) : (0,7 bis 1,5). Die unter Polykondensation verlaufende Veresterung kann unter Verwendung eines höhersiedenden inerten Lösungsmittels, wie Toluol oder Xylol, oder ohne Lösungsmittel in der Schmelze und unter Abdeckung mit einem Schutzgas durchgeführt werden, wobei die Durchführung in der Schmelze bevorzugt ist. Bei Veresterung mit einem Lösungsmittel wählt man als Reaktionstemperatur zweckmäßigerweise die Rückflußtemperatur des Reaktionsgemisches und entfernt das gebildete Reaktionswasser durch azeotrope Destillation. Bei Veresterung in Substanz wird das Reaktionswasser direkt aus der Reaktionsmischung ausgetragen. Die Reaktionstemperaturen liegen hier bei 60 bis 200 °C, vorzugsweise 80 bis 160 °C. Zur Beschleunigung der Reaktion verwendet man, wie es bei Veresterungsreaktionen zweckmäßig ist, einen alkalischen oder sauren Katalysator, wobei die saure Katalyse bevorzugt ist. Der Verlauf und das Ende der Reaktion kann mit Hilfe des entstehenden Reaktionswassers oder durch die Bestimmung der Amin- oder Säurezahl kontrolliert werden.

Nachstehend wird ein bevorzugtes Verfahren zur Herstellung der neuen Erdölspalter näher beschrieben.

Das oxalkylierte Fettamin, die Additionsverbindung aus Polyether-Blockpolymerisaten und Glycidylethern und die Dicarbonsäure sowie saurer Katalysator werden in einem Reaktionsgefäß vorgelegt. Geeignete saure Katalysatoren sind Halogenwasserstoffsäuren, Phosphorsäuren, Schwefelsäure, Sulfonsäuren und Halogenessigsäuren. Bevorzugt sind Salzsäure, Phosphorsäuren und Sulfonsäuren. Die Menge an Säure als Katalysator beträgt im allgemeinen 0,05 bis 5 Gew.-%, vorzugsweise 0,1 bis 1 Gew.-%, bezogen auf die Gewichtssumme aus den vorgelegten drei Reaktionskomponenten. Ein besonders vorteilhafter Katalysator für die erfindungsgemäße Veresterungsreaktion ist eine Mischung aus einer der genannten Säuren und einem Alkyltitanat oder Alkylpolytitanat. Bevorzugt sind Alkyltitanate der Formel $Ti(OR')_4$, worin R′ ein Alkylrest mit 1 bis 18 C-Atomen ist, vorzugsweise mit 1 bis 6 C-Atomen, und Alkylpolytitanate der Formel $R'O\text{-}[Ti(OR')_2O]_q\text{-}R'$, worin R′ die genannte Bedeutung hat und q eine Zahl von 1 bis 10 ist, vorzugsweise von 4 bis 7. Die Menge an Titanat liegt in der Regel bei 0,5 bis 2 Gew.-%, vorzugsweise 0,1 bis 1 Gew.-%, Gewichtsprozente bezogen auf die Gewichtssumme der drei Reaktionskomponenten. In einer solchen Menge wird auch die Säure eingesetzt, wenn als Katalysator die in Rede stehende Kombination aus Säure und Titanat verwendet wird.

Die im Reaktionsgefäß vorgelegte Mischung aus den drei Reaktionskomponenten und dem Veresterungskatalysator wird unter Rühren und Durchleiten eines inerten Gases auf 60 bis 200 °C, vorzugsweise 80 bis 160 °C, erhitzt und bei dieser Temperatur unter kontinuierlicher Austragung des entstehenden Wassers gehalten, bis die Umsetzung beendet ist. Die Austragung des Reaktionswassers kann auch mit Hilfe eines Vakuums von beispielsweise 1300 bis 2600 Pa (Wasserstrahlvakuum) erreicht werden. Das erhaltene Veresterungsprodukt kann durch Waschen mit Wasser vom eingesetzten Katalysator gereinigt werden. Die Reaktionszeit liegt im Bereich von 5 bis 20 Stunden. Die erfindungsgemäßen Veresterungsprodukte stellen gelb bis braun gefärbte Flüssigkeiten dar. Sie weisen eine spezifische chemische Charakteristik und eine spezielle Struktur auf und besitzen eine Viskosität von 2000 bis 60 000 mPa • s, vorzugsweise 4 000 bis 40 000 mPa • s.

Es wurde gefunden, daß die Wirkung des erfindungsgemäßen veresterten Glycidylether-Additionsproduktes, insbesondere hinsichtlich Korrosionsinhibierung noch verbessert werden kann, wenn es quaternisiert wird, vorzugsweise mit 1 bis 15 mol Ethylenoxid oder Propylenoxid pro Stickstoffatom in Gegenwart einer der Zahl der Stickstoffatome etwa äquivalenten Menge von einer Mineralsäure oder Carbonsäure (die eingesetzte Säure liefert das Anion bei der Quaternisierungsreaktion; die Zahl der Stickstoffatome im veresterten Glycidylether-Additionsprodukt kann beispielsweise durch Bestimmung der Aminzahl festgestellt werden). Die Quaternisierung, die vorzugsweise mit Ethylenoxid durchgeführt wird, erfolgt bei einer Temperatur von 60 bis 110 °C, vorzugsweise 70 bis 90 °C. Der Quaternisierungsgrad des erhaltenen Produktes kann durch Zweiphasentitration mit Natriumdodecylsulfat bei pH 1 bis 2 beziehungsweise pH 10 ermittelt werden. Die erhaltenen erfindungsgemäßen quartären veresterten Glycidylether-Additionsprodukte stellen gelb bis braun gefärbte, harzartige Substanzen dar und werden durch ihren Quaternisierungsgrad charakterisiert, der erfindungsgemäß bei 30 bis 99 %, vorzugsweise 60 bis 98 %, liegen soll. Nachstehend wird eine bevorzugte Vorgangsweise zu der in Rede stehenden Quaternisierung näher beschrieben. Das zu quaternisierende Produkt und eine den stickstoffhaltigen Monomereinheiten im Produkt im wesentlichen äquimolare Menge an Mineralsäure oder Carbonsäure werden in einem geeigneten Rührautoklaven vorgelegt und bei der angegebenen Temperatur vorzugsweise mit Ethylenoxid beaufschlagt, und zwar mit 1 bis 15 mol, vorzugsweise 2 bis 10 mol, pro mol stickstoffhaltige Monomereinheit. Während der Beaufschlagung wird aus Zweckmäßigkeitsgründen ein Reaktionsdruck von etwa 0,3 MPa nicht überschritten. Als Mineralsäuren werden vorzugsweise Halogenwasserstoffsäuren, Phosphorsäuren, Schwefelsäure oder Sulfonsäuren eingesetzt, wobei Phosphorsäuren besonders bevorzugt sind. Als Carbonsäuren werden vorzugsweise aliphatische Carbonsäuren mit 1 bis 6 C-Atomen, aliphatische Hydroxycarbonsäuren mit 1 bis 6 C-Atomen und mit 1 bis 3 Hydroxylgruppen oder aromatische Carbonsäuren, wie Benzoesäure und Salicylsäure,

eingesetzt. Die Carbonsäure kann auch eine, gegebenenfalls OH-substituierte, Di- oder Tricarbonsäure sein. Besonders bevorzugte Säuren sind Essigsäure, Propionsäure, Glykolsäure, Milchsäure und Phosphorsäure. Der Verlauf und das Ende der Umsetzung kann am Druckverlauf im Reaktionsgefäß und/oder durch Bestimmung des Quaternisierungsgrades verfolgt werden. Die Reaktionszeit liegt im Bereich von 10 bis 20 Stunden.

Die erfindungsgemäßen Additionsprodukte zeichnen sich durch eine hohe Demulgierwirkung aus. Bei den üblichen Erdölaufbereitungstemperaturen wird schon nach kurzer Separationszeit eine vollständige Wasserabscheidung und Reduzierung des Salzgehaltes erreicht. Mit den neuen Erdölspaltern werden also bei den üblichen Aufbereitungstemperaturen nach kurzer Separationszeit abnahmespezifische Roherdöle erhalten. Sie bewirken darüberhinaus, daß das abgetrennte Wasser praktisch frei von Öl ist, daß also auch eine vollständige Ölabscheidung aus dem abgetrennten Wasser und damit eine gute Wasserqualität erreicht wird. Mit den neuen Erdölspaltern wird ferner eine scharfe Trennung zwischen der Öl- und Wasserphase erreicht, was einen weiteren großen Vorteil darstellt. Die quaternisierten erfindungsgemäßen Erdölspalter haben über die genannten Eigenschaften hinaus auch noch eine hohe korrosionsinhibierende Wirkung.

Die Einsatzmenge an erfindungsgemäßem Demulgator kann in weiten Grenzen variieren. Sie hängt insbesondere von der Art des Erdöls und der Aufbereitungstemperatur ab. Die wirksame Menge beträgt im allgemeinen 5 bis 100 g pro Tonne, vorzugsweise 10 bis 50 g pro Tonne. Die neuen Spalter werden zum Zwecke der besseren Dosierung und Verteilbarkeit vorzugsweise in Lösung eingesetzt. Als Lösemittel sind Wasser oder organische Flüssigkeiten geeignet, beispielsweise Alkohole, wie Methanol, Isopropanol oder Butanol, aromatische Kohlenwasserstoffe, wie Toluol oder Xylol, und handelsübliche Mischungen aus höheren Aromaten.

Die Erfindung wird nun an Beispielen noch näher erläutert:

Nachstehend werden zunächst die Additionsprodukte aus einem Polyether-Blockpolymeren der Formel II und einem Glycidylether der Formel III oder IV beschrieben, die in den Beispielen verwendet wurden; es sind dies die Additionsprodukte (2a) bis (2e).

Das Additionsprodukt (2a) ist erhalten worden durch Addition von 1 mol Hydroxyl-Funktion eines Polyether-Blockpolymeren der Formel II mit $R^3 = CH_3$, $m + n = 22$, $p = 29$ und mit 36,3 % Polyethylenoxid-Anteil, bezogen auf das Molekulargewicht des Gesamtmoleküls, das 2 668 ist, und 0,8 mol Epoxid-Funktion eines Glycidylethers der Formel III mit $R^4 = H$, $A = C(CH_3)_2$, $x = 0{,}2$ und Äquivalentgewicht des Gesamtmoleküls = 192. Das Äquivalentgewicht des Additionsproduktes ist 1 275. Das Additionsprodukt (2b) ist erhalten worden durch Addition von 1 mol Hydroxyl-Funktion des oben angegebenen Polyether-Blockpolymeren und 0,9 mol Epoxid-Funktion eines Glycidylethers der Formel IV mit $y = 3{,}3$ und Äquivalentgewicht des Gesamtmoleküls = 180. Das Äquivalentgewicht des Additionsproduktes ist 976. Das Additionsprodukt (2c) ist das Additionsprodukt (2a) propoxiliert mit 50 g Propylenoxid pro 100 g Additionsprodukt. Das Äquivalentgewicht ist 1 870. Das Additionsprodukt (2d) ist das Additionsprodukt (2a) propoxiliert mit 100 g Propylenoxid pro 100 g Additionsprodukt. Das Äquivalentgewicht ist 2 192. Das Additionsprodukt (2e) ist das Additionsprodukt (2b) propoxiliert mit 250 g Propylenoxid pro 100 g Additionsprodukt. Das Äquivalentgewicht ist 1 600. Obwohl die Addition der in Rede stehenden Polyether-Blockpolymeren und Glycidylether und die Propoxilierung des Additionsproduktes wohlbekannt sind, sei hier zur Addition noch folgendes gesagt: Sie erfolgte im einzelnen in der Weise, daß zunächst das Polyether-Blockpolymere mit einer wäßrigen Lösung von einem alkalischen Katalysator (beispielsweise mit einer etwa 30gew.%igen wäßrigen Kaliumhydroxid-Lösung) auf einen Katalysatorgehalt von 0,05 bis 3 Gew.-%, vorzugsweise 0,1 bis 1 Gew.-%, eingestellt und die Mischung anschließend mit dem Glycidylether bei einer Temperatur von 70 bis 150 °C, vorzugsweise 80 bis 120 °C, umgesetzt wurde.

Beispiel 1

In einem Reaktionsgefäß, das mit Rührer, Rückflußkühler und Thermometer ausgestattet war, wurden vorgelegt 248 g, das sind 0,80 mol Hydroxyl-Funktion, eines Oleylamins kondensiert mit 8 mol Ethylenoxid, das ist ein Fettamin der Formel I mit $R^1 = C_{18}H_{35}$, $R^2 = H$ und $a + b = 8$ (Reaktionskomponente 1),
102 g, das sind 0,08 mol Hydroxyl-Funktion von dem Additionsprodukt (2a) (Reaktionskomponente 2) und 31,4 g, das sind 0,64 mol Carboxyl-Funktion Maleinsäureanhydrid (Reaktionskomponente 3) sowie 0,76 g, das sind 0,20 Gew.-%, bezogen auf die Gewichtssumme aus den drei Reaktionskomponenten, von einem polymeren Butyltitanat der Formel $C_4H_9O[Ti(OC_4H_9)_2O]_5C_4H_9$ und 0,90 g einer 50gew.%igen wäßrigen hypophosphorigen Säure, das sind 0,12 Gew.-%, bezogen auf die Gewichtssumme aus den drei Reaktionskomponenten, hypophosphorige Säure ($H_3PO_2$), als Veresterungskatalysatoren. Die drei Reaktionskomponenten wurden also im Äquivalentverhältnis von 1 : 0,1 : 0,8 eingesetzt.

Die Mischung wurde erhitzt und bei einer Temperatur von 130 bis 140 °C unter Wasserstrahlvakuum zwei Stunden lang gehalten, wobei die Reaktionskomponenten unter Veresterung reagierten. Zur Nachreaktion wurde die Mischung weitere neun Stunden bei einer Temperatur von 150 bis 160 °C und Wasserstrahlvakuum gehalten. Der Verlauf und das Ende der Veresterungsreaktion wurde durch Bestimmung der Säurezahl verfolgt. Das bei einem Umsetzungsgrad von 96 % erhaltene Veresterungsprodukt ist eine Flüssigkeit mit der Viskosität von 25,3 Pas.

Beispiel 2

Reaktionskomponenten:

(1) Talgfettamin mit 2 mol Ethylenoxid
(2) Additionsprodukt (2b)
(3) Dodecenylbernsteinsäureanhydrid

Äquivalentverhältnis von (1) : (2) : (3) = 1 : 1,0 : 1,4
Durchführung wie in Beispiel 1.
Umsetzungsgrad 95 %, Viskosität 9,7 Pas.

Beispiel 3

Reaktionskomponenten:

(1) Stearylamin mit 8 mol Ethylenoxid
(2) Additionsprodukt (2c)
(3) Adipinsäure

Äquivalentverhältnis von (1) : (2) : (3) = 1 : 0,5 : 0,9
Durchführung wie in Beispiel 1.
Umsetzungsgrad 91 %, Viskosität 4,5 Pas.

Beispiel 4

Reaktionskomponenten:

(1) Talgfettamin mit 10 mol Ethylenoxid
(2) Additionsprodukt (2d)
(3) dimerisierte Fettsäure mit einem Alkylgerüst mit 34 C-Atomen

Äquivalentverhältnis von (1) : (2) : (3) = 1 : 0,3 : 0,9
Durchführung wie in Beispiel 1.
Umsetzungsgrad 98,5 %, Viskosität 15,4 Pas.

Beispiel 5

Reaktionskomponenten:

(1) Cocosfettamin mit 15 mol Ethylenoxid
(2) Additionsprodukt (2e)
(3) Phthalsäureanhydrid

Äquivalentverhältnis von (1) : (2) : (3) = 1 : 1,5 : 2
Durchführung wie in Beispiel 1.
Umsetzungsgrad 98 %, Viskosität 37,0 Pas.

Beispiel 6

Das Veresterungsprodukt von Beispiel 1 wurde quaternisiert.
In einem Rührautoklaven wurden vorgelegt 376 g, das sind 0,40 mol Stickstoff-Funktion Veresterungsprodukt des Beispiels 1 und 47 g einer 85gew.%igen wäßrigen Milchsäure (0,44 mol Milchsäure) als Anion-Anteil bei der Quaternisierungsreaktion sowie 22 g Wasser und 533 g Isobutanol als Lösungsmittel. Die Mischung wurde auf 80 °C erhitzt und bei dieser Temperatur mit 88 g (2 mol) Ethylenoxid beaufschlagt

unter Einhaltung eines maximalen Druckes von 0,25 MPa und einer Reaktionszeit von insgesamt 12 Stunden. Es wurde also mit 5 mol Ethylenoxid pro mol stickstoffhaltige Monomereinheiten quaternisiert. Das nach Entfernung aller leichtflüchtigen Bestandteile erhaltene Quaternisierungsprodukt, eine harzartige Substanz, hatte einen Quaternisierungsgrad von 98 %.

Beispiel 7 bis 10

Die Veresterungsprodukte der Beispiele 2 bis 5 wurden quaternisiert, und zwar mit 2 mol Ethylenoxid (Beispiel 7), 10 mol Ethylenoxid (Beispiel 8), 5 mol Ethylenoxid (Beispiel 9) und 5 mol Propylenoxid (Beispiel 10). Durchführung jeweils wie in Beispiel 6 (die Lösungsmittelmenge wurde, ebenso wie in Beispiel 6, so gewählt, daß das Endprodukt jeweils als 50%ige isobutanolische Lösung vorlag). Die quaternären Veresterungsprodukte hatten einen Quaternisierungsgrad von 63 %, 96 %, 95 %, beziehungsweise 72 %.

Die erfindungsgemäßen Erdölspalter der Beispiele 1 bis 10 wurden in Erdölemulsionen getestet. Die Ergebnisse sind in den nachstehenden Tabellen I und II zusammengefaßt.

T a b e l l e I

Ursprung der Rohölemulsion: Borneo

Wassergehalt der Rohölemulsion: 26,8 Vol.-%

Demulgiertemperatur: 35 °C

Dosiermenge: 45 ppm

| Veresterungsprodukt aus Beispiel | Wasserseparation in Vol.-% nach Minuten | | | | | | Restwassergehalt in Gew.-% in der Ölphase |
|---|---|---|---|---|---|---|---|
| | 10 | 20 | 30 | 60 | 120 | 180 | |
| 1 | 42 | 64 | 75 | 81 | 85 | 88 | 0,17 |
| 2 | 54 | 63 | 72 | 78 | 87 | 91 | 0,14 |
| 3 | 61 | 67 | 78 | 88 | 91 | 93 | 0,11 |
| 4 | 53 | 77 | 82 | 87 | 95 | 96 | 0,10 |
| 5 | 80 | 87 | 90 | 93 | 95 | 96 | 0,09 |
| 6 | 62 | 63 | 64 | 88 | 97 | 100 | 0,07 |
| 7 | 69 | 81 | 88 | 96 | 99 | 99 | 0,06 |
| 8 | 84 | 89 | 95 | 97 | 100 | 100 | 0,04 |
| 9 | 45 | 67 | 85 | 98 | 100 | 100 | 0,03 |
| 10 | 86 | 92 | 95 | 99 | 99 | 100 | 0,04 |
| Blindwert | 0 | 0 | 0 | 0 | 0 | 0 | 6,21 |

T a b e l l e  I I

Ursprungsland: Saudi Arabien

Wassergehalt der Rohölemulsion: 32,5 Vol.-%

Salzgehalt der Rohölemulsion: 5,6 Gew.-%

Demulgiertemperatur: 42 °C

Dosiermenge: 24 ppm

| Veresterungsprodukt aus Beispiel | Wasserseparation in Vol.-% nach Minuten | | | | | Restsalzgehalt in ppm in der Ölphase |
|---|---|---|---|---|---|---|
| | 20 | 40 | 60 | 90 | 120 | |
| 1 | 58 | 72 | 79 | 86 | 93 | 850 |
| 2 | 68 | 80 | 85 | 90 | 94 | 725 |
| 3 | 55 | 85 | 91 | 95 | 97 | 548 |
| 4 | 42 | 63 | 80 | 94 | 97 | 520 |
| 5 | 61 | 88 | 95 | 99 | 100 | 318 |
| 6 | 28 | 76 | 96 | 100 | 100 | 205 |
| 7 | 81 | 87 | 93 | 99 | 100 | 275 |
| 8 | 84 | 93 | 97 | 100 | 100 | 188 |
| 9 | 92 | 97 | 99 | 100 | 100 | 115 |
| 10 | 74 | 94 | 98 | 99 | 100 | 138 |
| Blindwert | 0 | 0 | 0 | 0 | 0 | 18 650 |

Die erfindungsgemäßen Quaternisierungsprodukte der Beispiele 6 bis 10 wurden auch auf ihre Inhibierwirkung der Korrosion getestet. Bei diesem Test wurde der Gewichtsverlust von Coupons aus Kohlenstoffstahl mit 20 $cm^2$ Oberfläche bestimmt. Die Coupons tauchten 6 Stunden lang in Wasser mit 20 Gew.-% Natriumchlorid und 60 °C ein. Durch die ständig gerührte Lösung perlte während der Versuchsdauer ein Kohlendioxid-Strom. Die Inhibierung wird in Prozenten angegeben, wobei der Blindwert ohne Inhibitor als

Bezugsgröße 0 % ist (dies entspricht 100 % Gewichtsverlust). Die Testergebnisse sind in der nachstehenden Tabelle III zusammengefaßt. Sie zeigen, daß die erfindungsgemäßen Produkte neben der hohen Spaltwirkung auch eine hervorragende Korrosionsinhibierung aufweisen, die in allen Anlagen der Förderung und Aufbereitung von Erdöl und Erdgas gegeben sein sollte.

Tabelle III

| Produkt aus Beispiel | **Einsatzmenge** | | |
|---|---|---|---|
| | 10 ppm | 40 ppm | 60 ppm |
| | % Inhibierung | | |
| 6 | 85,6 | 85,6 | 86,8 |
| 7 | 79,2 | 83,7 | 84,2 |
| 8 | 80,7 | 84,8 | 85,3 |
| 9 | 76,4 | 80,2 | 82,3 |
| 10 | 83,8 | 85,5 | 87,0 |

## Patentansprüche

**1.** Veresterte Glycidylether-Additionsprodukte, hergestellt durch Veresterung von (1) einem oxalkylierten primären Fettamin der nachstehenden Formel I

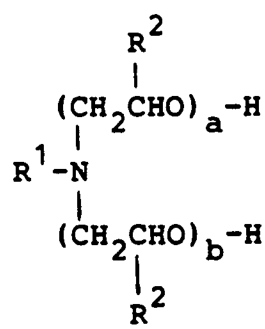

worin $R^1$ ein Alkylrest oder Alkenylrest mit 6 bis 23 C-Atomen ist, $R^2$ H oder $CH_3$ ist und innerhalb der Kette des Polyoxalkylenrestes, in Blöcken angeordnet, auch beide Bedeutungen annehmen kann, und a und b Zahlen von insgesamt 2 bis 30 sind, mit der Maßgabe, daß weder a noch b Null ist,
und (2) einem Additionsprodukt aus 1 mol OH-Funktion eines Polyether-Blockpolymeren der nachstehenden Formel II

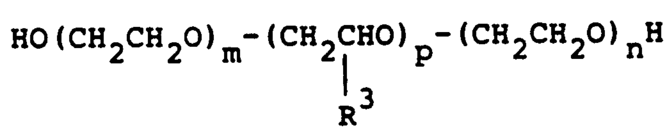

worin $R^3$ methyl oder Ethyl bedeutet, n und m Zahlen sind, die so gewählt sind, daß der Polyethylenoxidanteil 10 bis 80 % des Molekulargewichts des Gesamtmoleküls beträgt, und p eine Zahl von 10 bis 100 ist,
und 0,3 bis 1 mol Epoxid-Funktion eines Glycidylethers der nachstehenden Formel III

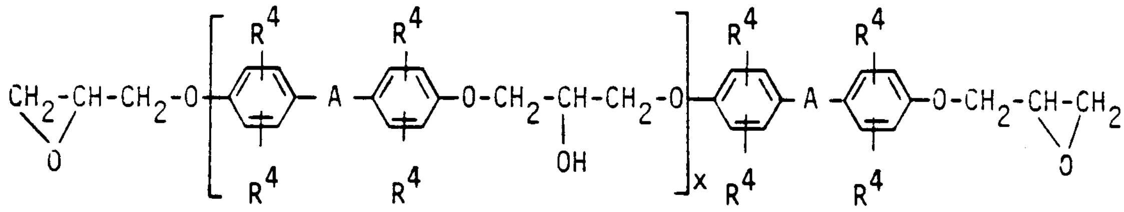

worin $R^4$ gleich oder verschieden sein kann und Wasserstoff, $C_1$-$C_4$-Alkyl oder Halogen, A eine direkte Bindung, eine Sulfonyl- oder Cyclohexylgruppe oder eine Gruppe der Formel

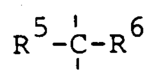

worin $R^5$ und $R^6$ Wasserstoff, Methyl oder Phenyl bedeuten, und x eine Zahl von 0 bis 10 bedeutet,
oder 0,1 bis 1,5 mol Epoxid-Funktion eines Glycidylethers der nachstehenden Formel IV

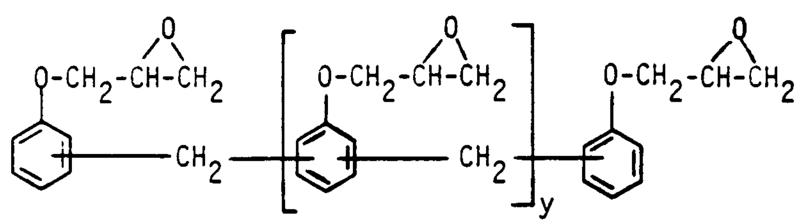

worin y eine Zahl von 1 bis 10 ist,
mit (3) einer Dicarbonsäure, wobei die Reaktionskomponenten (1), (2) und (3) im Äquivalentverhältnis von 1 : (0,1 bis 1,5) : (0,5 bis 2) eingesetzt werden.

**2.** Additionsprodukte nach Anspruch 1, dadurch gekennzeichnet, daß das Additionsprodukt (2) gebildet ist aus 1 mol OH-Funktion eines Polyether-Blockpolymeren der Formel II, worin $R^3$ = $CH_3$ ist, m und n Zahlen sind, die so gewählt sind, daß der Polyethylenoxid-Anteil 15 bis 70 % des Molekulargewichtes des Gesamtmoleküls beträgt, und p eine Zahl von 20 bis 70 ist, und 0,3 bis 1 mol Epoxid-Funktion eines Glycidylethers der Formel III, worin ist, $R^4$ = H ist, A eine Gruppe der Formel

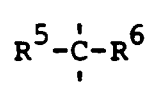

ist, worin $R^5$ und $R^6$ H oder $CH_3$ sind, und x eine Zahl von 0 bis 5 ist, oder 0,1 bis 1,5 mol Epoxid-Funktion eines Glycidylethers der Formel IV, worin y eine Zahl von 2 bis 5 ist.

**3.** Additionsprodukte nach Anspruch 1 oder 2, dadurch gekennzeichnet, daß das Additionsprodukt (2) mit 5 bis 700 g Propylenoxid pro 100 g propoxiliert ist.

**4.** Additionsprodukte nach einem oder mehreren der Ansprüche 1 bis 3, dadurch gekennzeichnet, daß das Äquivalentverhältnis der Reaktionskomponenten (1), (2) und (3) 1 : (0,1 bis 1) : (0,7 bis 1,5) beträgt.

**5.** Additionsprodukte nach einem oder mehreren der Ansprüche 1 bis 4, dadurch gekennzeichnet, daß das Veresterungsprodukt aus den Reaktionskomponenten (1), (2) und (3) quaternisiert ist und einen Quaternisierungsgrad von 30 % bis 99 % besitzt.

6. Additionsprodukte nach einem oder mehreren der Ansprüche 1 bis 5, dadurch gekennzeichnet, daß das Veresterungsprodukt aus den Reaktionskomponenten (1), (2) und (3) mit 1 bis 15 mol Ethylenoxid oder Propylenoxid pro mol Stickstoffatom im Veresterungsprodukt quaternisiert ist und einen Quaternisierungsgrad von 30 % bis 99 % besitzt.

7. Verwendung der veresterten Glycidylether-Additionsprodukte nach den Ansprüchen 1 bis 6 zum Spalten von Erdölemulsionen.

8. Verwendung der quartären veresterten Glycidylether-Additionsprodukte nach den Ansprüchen 5 und 6 zum Spalten von Erdölemulsionen und als Korrosionsinhibitoren in Anlagen für die Erdgas- und Erdölförderung und -aufbereitung.

**Claims**

1. Esterified glycidyl ether addition products, prepared by esterification of (1) an oxalkylated primary fatty amine of the following formula I

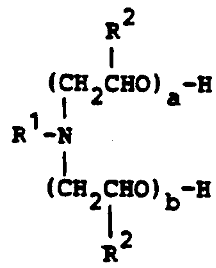

in which $R^1$ is an alkyl radical or an alkenyl radical having 6 to 23 carbon atoms, $R^2$ is H or $CH_3$ and may also take both meanings within the chain of the polyoxalkylene radical, arranged in blocks, and a and b are numbers whose sum is 2 to 30, with the provision that neither a nor b is zero,
and (2) an addition product made from 1 mol OH function of a polyether block polymer of the following formula II

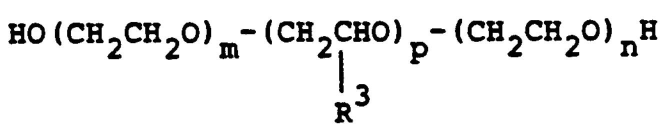

in which $R^3$ represents methyl or ethyl, n and m are numbers, which are selected in such a way that the proportion of polyethylene oxide is 10 to 80 % of the molecular weight of the total molecule, and p is a number from 10 to 100,
and 0.3 to 1 mol epoxide function of a glycidyl ether of the following formula III

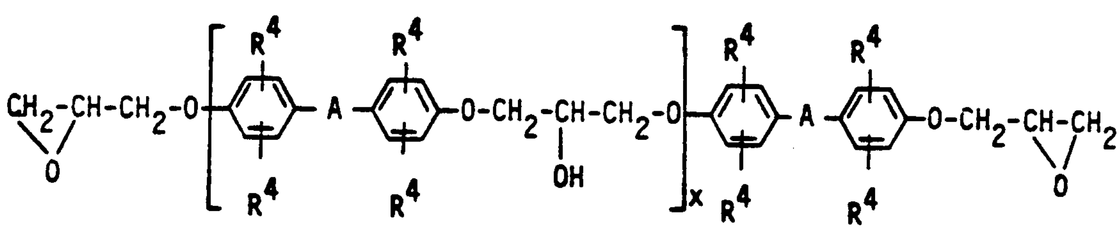

in which $R^4$ may be identical or different and represents hydrogen, $C_1$-$C_4$-alkyl or halogen, A a direct bond, a sulfonyl or cyclohexyl group or a group of the formula

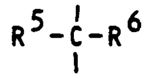

in which $R^5$ and $R^6$ are hydrogen, methyl or phenyl, and x is a number from 0 to 10, or 0.1 to 1.5 mol epoxide function of a glycidyl ether of the following formula IV

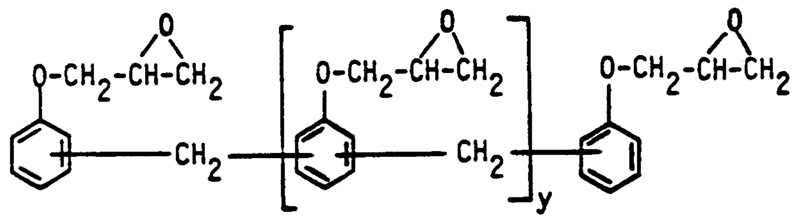

in which y is a number from 1 to 10, with (3) a dicarboxylic acid, in which the reaction components (1), (2) and (3) are used in the ratio of equivalents 1 : (0.1 to 1.5) : (0.5 to 2).

2. The addition product as claimed in claim 1, wherein the addition product (2) is formed from 1 mol OH function of a polyether block polymer of the formula II, in which $R^3$ is $CH_3$, m and n are numbers, which are selected in such a way that the proportion of polyethylene oxide is 15 to 70 % of the molecular weight of the total molecule, and p is a number from 20 to 70, and 0.3 to 1 mol epoxide function of a glycidyl ether of the formula III, in which $R^4$ is H, A is a group of the formula

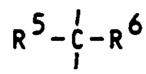

in which $R^5$ and $R^6$ are H or $CH_3$, and x is a number from 0 to 5, or 0.1 to 1.5 mol epoxide function of a glycidyl ether of the formula IV, in which y is a number from 2 to 5.

3. The addition product as claimed in claim 1 or 2, wherein the addition product (2) is propoxylated with 5 to 700 g propylene oxide per 100 g.

4. The addition product as claimed in one or more of claims 1 to 3, wherein the ratio of equivalents of the reaction components (1), (2) and (3) is 1 : (0.1 to 1) : (0.7 to 1.5).

5. The addition product as claimed in one or more of claims 1 to 4, wherein the esterification product from the reaction components (1), (2) and (3) is quaternized and has a degree of quaternization of 30 % to 99 %.

6. The addition product as claimed in one or more of claims 1 to 5, wherein the esterification product from the reaction components (1), (2) and (3) is quaternized with 1 to 15 mol ethylene oxide or propylene oxide per mol nitrogen atom in the esterification product and has a degree of quaternization of 30 % to 99 %.

7. A use of the esterified glycidyl ether addition products as claimed in any of claims 1 to 6 for the splitting of crude oil emulsions.

8. A use of the quaternary esterified glycidyl ether addition products as claimed in claims 5 and 6 for the splitting of crude oil emulsions and as corrosion inhibitors in plants for natural gas and crude oil production and processing.

## Revendications

1. Produits d'addition d'éthers de glycidyle estérifiés, préparés par estérification (1) d'une amine grasse primaire oxyalkylée ayant la formule I ci-dessous:

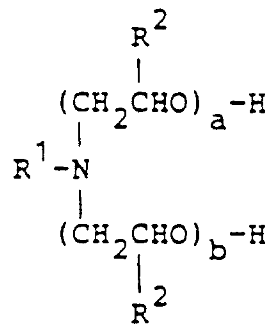

dans laquelle $R^1$ est un reste alkyle ou un reste alcényle de 6 à 23 atomes de carbone, $R^2$ est H ou $CH_3$ et peut aussi prendre les deux significations à l'intérieur de la chaîne polyoxyalkylène, arrangée en blocs, et a et b sont des nombres dont le total est compris entre 2 à 30, sous réserve que ni a ni b ne soit zéro,

et (2) d'un produit d'addition obtenu à partir d'1 mole de fonction OH d'un polymère à blocs de polyéthers ayant la formule II ci-dessous

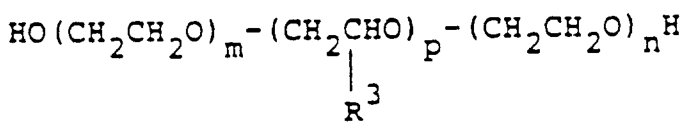

dans laquelle $R^3$ représente un reste méthyle ou éthyle, n et m sont des nombres qui sont choisis de façon que la fraction de poly(oxyde d'éthylène) représente 10 à 80 % de la masse moléculaire de la molécule globale, et p est un nombre de 10 à 100,

et de 0,3 à 1 mole de fonction époxy d'un éther de glycidyle ayant la formule III ci-dessous

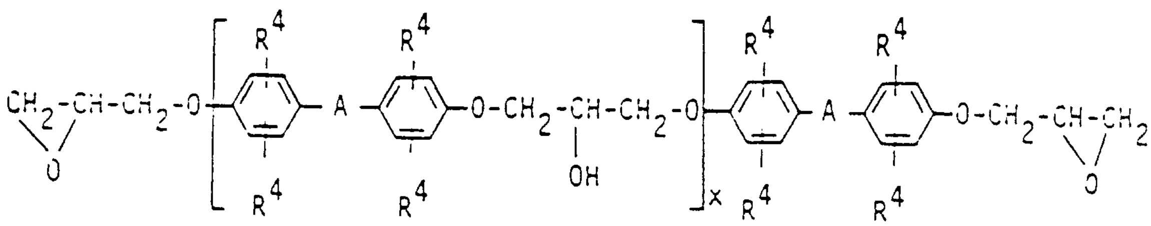

dans laquelle les $R^4$ peuvent être identiques ou différents et représentent un hydrogène, un alkyle en $C_1$-$C_4$ ou un halogène, A représente une liaison directe, un groupe sulfonyle ou cyclohexyle ou un groupe de formule

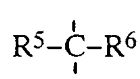

dans laquelle $R^5$ et $R^6$ représentent un hydrogène, un méthyle ou un phényle, et x représente un nombre de 0 à 10,

ou 0,1 à 1,5 mole de fonction époxy d'un éther de glycidyle ayant la formule IV ci-dessous

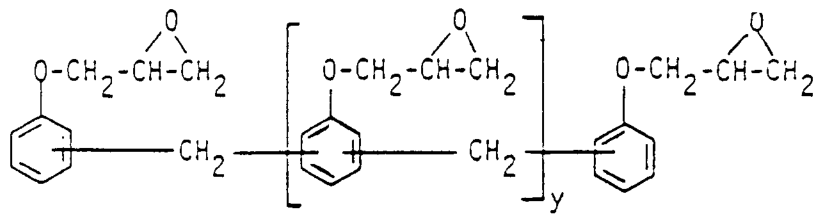

dans laquelle y est un nombre de 1 à 10,

avec (3) un acide dicarboxylique, les constituants réactionnels (1), (2) et (3) étant utilisés en un rapport en équivalents de 1 : (0,1 à 1,5) : (0,5 à 2).

**2.** Produits d'addition selon la revendication 1, caractérisés en ce que le produit d'addition (2) est formé à partir d'1 mole de fonction OH d'un polymère à blocs de polyéthers de formule II dans laquelle $R^3$ est $CH_3$, m et n sont des nombres qui sont choisis de façon que la fraction de poly(oxyde d'éthylène) représente 15 à 70 % de la masse moléculaire de la molécule globale, et p est un nombre de 20 à 70, et de 0,3 à 1 mole de fonction époxy d'un éther de glycidyle de formule III dans laquelle $R^4$ = H, A représente un groupe de formule $R^5$-C-$R^6$, où $R^5$ et $R^6$ sont H ou $CH_3$, et x est un nombre de 0 à 5, ou 0,1 à 1,5 mole de fonction époxy d'un éther de glycidyle de formule IV dans laquelle y est un nombre de 2 à 5.

**3.** Produits d'addition selon la revendication 1 ou 2, caractérisés en ce que le produit d'addition (2) est propoxylé avec 5 à 700 g d'oxyde de propylène par 100 g.

**4.** Produits d'addition selon l'une ou plusieurs des revendications 1 à 3, caractérisés en ce que le rapport en équivalents des constituants réactionnels (1), (2) et (3) est de 1 : (0,1 à 1) : (0,7 à 1,5).

**5.** Produits d'addition selon l'une ou plusieurs des revendications 1 à 4, caractérisés en ce que le produit d'estérification formé à partir des constituants réactionnels (1), (2) et (3) est quaternisé et possède un degré de quaternisation de 30 % à 99 %.

**6.** Produits d'addition selon l'une ou plusieurs des revendications 1 à 5, caractérisés en ce que le produit d'estérification formé à partir des constituants réactionnels (1), (2) et (3) est quaternisé avec 1 à 15 moles d'oxyde d'éthylène ou d'oxyde de propylène par mole d'atome d'azote du produit d'estérification, et possède un degré de quaternisation de 30 % à 99 %.

**7.** Utilisation des produits d'addition d'éthers de glycidyle estérifiés selon les revendications 1 à 6 pour la rupture d'émulsions de pétrole.

**8.** Utilisation des produits d'addition d'éthers de glycidyle estérifiés quaternaires selon les revendications 5 et 6 pour la rupture d'émulsions de pétrole et comme inhibiteurs de corrosion dans des installations d'extraction et de traitement de gaz naturel et de pétrole.